(19) **Europäisches Patentamt**
**European Patent Office**
**Office européen des brevets**

(11) Veröffentlichungsnummer: **0 099 531**
**B1**

(12) **EUROPÄISCHE PATENTSCHRIFT**

(45) Veröffentlichungstag der Patentschrift: **16.05.90**

(21) Anmeldenummer: **83106769.9**

(22) Anmeldetag: **11.07.83**

(51) Int. Cl.⁵: **C 01 B 33/32, C 08 G 77/02,**
**C 08 G 18/32, C 08 G 18/50,**
**C 08 G 18/83, C 08 G 18/00**

(54) **Stabile Wasserglaslösungen, Verfahren zu deren Herstellung und Verwendung für Organosilikatschaumstoffe sowie ein Herstellungs-verfahren hierfür.**

(30) Priorität: **23.07.82 DE 3227580**

(43) Veröffentlichungstag der Anmeldung:
**01.02.84 Patentblatt 84/05**

(45) Bekanntmachung des Hinweises auf die
Patenterteilung:
**16.05.90 Patentblatt 90/20**

(84) Benannte Vertragsstaaten:
**AT BE CH DE FR GB IT LI NL SE**

(56) Entgegenhaltungen:
**EP-A-0 000 579      DE-A-2 460 834**
**EP-A-0 039 666      DE-B-1 667 538**
**DE-A-1 770 384      US-A-4 273 908**
**DE-A-2 227 147**

(73) Patentinhaber: **BASF Aktiengesellschaft**
**Carl-Bosch-Strasse 38**
**D-6700 Ludwigshafen (DE)**

(72) Erfinder: **Horn, Peter, Dr.**
**Neue Stuecker 15**
**D-6900 Heidelberg (DE)**
Erfinder: **Gehm, Robert, Dr.**
**Mannheimer Strasse 45**
**D-6703 Limburgerhof (DE)**
Erfinder: **Marx, Matthias, Dr.**
**Seebacher Strasse 49**
**D-6702 Bad Duerkheim (DE)**
Erfinder: **Roeber, Artur**
**Dackenheimer Strasse 6**
**D-6700 Ludwigshafen (DE)**

Courier Press, Leamington Spa, England.

# EP 0 099 531 B1

## Beschreibung

Die Herstellung von harten oder flexiblen anorganisch-organischen Kunststoffen ist bekannt.

Nach Angaben der französischen Patentschriften 1 362 003 und 1 419 552 werden als Isolationsmaterial verwendbare Schaumstoffe auf der Grundlage von Alkalisilikaten, Polyisocyanaten und natürlichen oder synthetischen Harzen hergestellt.

Siliciumhaltige Produkte werden gemäß DE—OS 17 70 384 (US 3 607 794) ferner durch Umsetzung von wäßrigen Lösungen eines Alkalisilikates mit einem organischen Isocyanat oder Isothiocyanat erhalten.

Zur Beschleunigung der Reaktion zwischen der Wasserglaslösung und den organischen Polyisocyanaten werden in der DE—OS 24 60 834 (US 4 136 238) Katalysatoren beschrieben, die eine Zwitterionenstruktur besitzen.

Nachteilig an den genannten Verfahren ist, daß bereits beim Vermischen der Aufbaukomponenten gallertartige Abscheidungen gebildet werden, die verfahrens- und maschinentechnische Schwierigkeiten bei der Verarbeitung verursachen und letztlich zu inhomogenen Kunststoffen führen.

Zur Vermeidung dieser Nachteile werden gemäß DE—OS 2 227 147 (US 4 097 423) anstelle von Polyisocyanaten endständige Isocyanatgruppen aufweisende Präpolymer-Ionomere, die 2 bis 200 Milliäquivalente pro 100 g ionische Gruppen besitzen, verwendet. Da die Präpolymer-M/P-Ionomere in einem zusätzlichen Verfahrensschritt hergestellt werden müssen, ist das Verfahren kostspielig. Nachteilig ist außerdem, daß die Produkte häufig Viskositäten von mehr als 2000 m.Pa.s und zuweilen bis zu. 100 000 m.Pa.s/25°C und höher besitzen, so daß sie nicht direkt verarbeitet werden können. Zur Absenkung der Viskosität müssen die Präpolymer-Ionomere mit Zusätzen, beispeilsweise Lösungsmitteln oder niedrig viskosen Isocyanaten, verdünnt werden; dies führt jedoch wiederum zu einer zeitlichen Ausdehnung der Härtung.

Nach Angaben der EP—OS 579 (US 4 276 404) werden die organischen Polyisocyanate zunächst mit einer wäßrigen basischen Lösung oder Suspension der anorganischen Verbindungen zu einer Primärdispersion umgesetzt und danach dieser Primärdispersion fließfähige anorganische Verbindungen und gegebenenfalls Katalysatoren und Zusatzmittel unter Ausbildung einer Enddispersion einverleibt. Das Verfahren ist umständlich und technisch schwer realisierbar.

Die DE—B—1 667 538 beschreibt ein Verfahren zur Herstellung beständiger Alkalisilikatlösungen mit einem $SiO_2$-Gehalt von mehr als 10% und einem Molverhältnis von Alkalimetalloxid zu $SiO_2$ kleiner als 1, insbesondere von 1:4,5 bis 9 unter Zusatz von quartären, hydroxylgruppenhaltigen Stickstoffverbindungen, wobei als Ausgangskomponenten bereits $SiO_2$-reiche Wassergläser Verwendung finden und der Alkalimetalloxidgehalt durch Zugabe feinteiliger Kieselsäure weiter reduziert wird. Derartige Wassergläser mit hoher $SiO_2$-Konzentration finden Verwendung als Klebe- und Bindemittel.

Nach Angaben der US—A—4 273 908 werden Alkalimetallmetasilikate mit weniger als 5 Wassermolekülen in einem Polyol emulgiert und die erhaltene Emulsion mit organischen Polyisocyanaten in Gegenwart beliebiger Katalysatoren, wie z.B. tertiären Aminen, Organometallverbindungen, Silaaminen oder anderen Katalysatoren zu Poly(polyisocyanat-polyol-alkalimetallsilikat) produkten umgesetzt. Die erhaltenen Produkte, die in harzartiger oder geschäumter Form vorliegen können und vielfach in organischen Lösungsmitteln löslich sind, finden Verwendung als Überzugsmittel, Appreturmittel für den Faserfinish oder als Aufbaukomponente zur Herstellung von Fasern oder Folien für synthetische Papiere oder Vliese. In der Publikation nicht beschrieben wird hingegen die Herstellung geeigneter Wasserglaslösungen.

Aufgabe der vorliegenden Erfindung war es, stabile Aufbaukomponenten zur Herstellung von Organosilikatschaumstoffen zu entwickeln, die auf üblichen, für die Polyurethanschaumstoffherstellung bekannten Vorrichtungen verarbeitet werden können.

Diese Aufgabe konnte überraschenderweise gelöst werden mit stabilen Wasserglaslösungen, die erhalten werden

A) durch Mischen
   a) einer Lösung aus
   i) 100 Gew.-Teilen einer wäßrigen Alkalisilikatlösung mit einem Molverhältnis Alkalimetalloxid:$SiO_2$ größer als 1 und einer Dichte von 28° bis 60° Be und
   ii) 1,5 bis 20 Gew.-Teilen Alkalihydroxid mit
   b) 2 bis 12 Gew.-Teilen eines tertiären Amins
   und anschließender Oxalkylierung der erhaltenen zweiphasigen Reaktionsmischung mit
   c) mindestens einem Mol eines Alkylenoxids pro Mol tert. Amin oder

B) durch Oxalkylierung in Gegenwart von Wasser von
   b) 2 bis 12 Gew.-Teilen eines tertiären Amins mit
   c) mindestens einem Mol eines Alkylenoxids pro Mol tert. Amin
   und Mischen des erhaltenen Reaktionsgemisches mit
   a) einer Lösung aus
   i) 100 Gew.-Teilen einer wäßrigen Alkalisilikatlösung mit einem Molverhältnis Alkalimetalloxid: $SiO_2$ größer als 1 und einer Dichte von 28° bis 60° Be und

ii) 1,5 bis 20 Gew.-Teilen Alkalihydroxid.

Die erfindungsgemäßen Wasserglaslösungen sind stabil und können mit den übrigen Aufbaukomponenten zur Herstellung von Organosilikatschaumstoffen gemischt werden, ohne daß Kieselsäuren oder andere Verbindungen ausgeschieden werden.

Aus den erfindungsgemäßen Wasserglaslösungen können in einfacher und reproduzierbarer Weise, wobei ein gleichmäßiger Ablauf von Polyurethanreaktion und Vernetzung des Wasserglases gewährleistet ist, analog der Polyurethanschaumstofftechnik weitgehend offenzellige Organosilikatschaumstoffe hergestellt werden, die mit Dichten von vorzugsweise 7 bis 20 g/l extrem leicht sind und praktisch nicht schrumpfen. Die Organosilikatschaumstoffe sind auch ohne Zusatz von üblichen Flammschutzmitteln im wesentlichen flammwidrig und besitzen insbesondere eine äußerst niedrige Raumgasdichte.

Zu den für die stabilen Wasserglaslösungen geeigneten Aufbaukomponenten und den Ausgangsstoffen zur Herstellung der Organosilikatschaumstoffe möchten wir folgendes ausführen:

Zur Herstellung der erfindungsgemäßen stabilen Wasserglaslösungen können wäßrige Alkalisilikatlösungen der Formel $M_2O.SiO_2$ verwendet werden, in der M ein Alkalimetall, beispielsweise Kalium oder vorzugsweise Natrium bedeutet, das Moverhältnis von $M_2O:SiO_2$ größer als 1, vorzugsweise 1,6 bis 4 und insbesondere 2 bis 3,6 ist und die Dichte 28 bis 60°Be, vorzugsweise 35 bis 41°Be beträgt. Bensoders bewährt haben sich und daher vorzugsweise verwendet werden wäßrige Natriumsilikatlösungen mit Molverhältnissen von $Na_2O:SiO_2$ von 2 bis 3,6 und Dichten von 38 bis 40 Be.

100 Gew.-Teile der genannten wäßrigen Alkalisilikatlösungen werden mit 1,5 bis 20 Gew.-Teilen, vorzugweise 3 bis 15 Gew.-Teilen Alkalihydroxid, beispielsweise Kaliumhydroxid oder vorzugsweise Natriumhydroxid behandelt. Die Alkalihydroxide werden vorzugweise in Form von wäßrigen Lösungen verwendet, wobei deren Konzentration in Abhängigkeit von der Dichte der Alkalisilikatlösung in breiten Bereichen veriiert werden kann. Geeignet sind beispielsweise 30 bis 80 gew.%ige, vorzugsweise 40 bis 60 gew.-%ige wäßrige Alkalihydroxidlösungen, wobei ungefähr 50 gew.%ige wäßrige Natriumhydroxidlösungen bevorzugt Anwendung finden.

Als tertiäre Amine eignen sich Verbindungen, wie sie üblicherweise zur Beschleunigung der Treibreaktion, d.h. zur Bildung von Kohlendioxid aus Polyisocyanat und Wasser, bei der Polyurethan-Schaumstoffherstellung eingesetzt werden. Beispielhaft genannt seien permethylierte Polyamine, permethylierte Aminoalkylether und/oder N,N-Dialkylalkanolamine, die gegebenenfalls in Kombination mit Metallnitraten, wie z.B. Zink- und/oder Kupfernitrat eingesetzt werden. Vorzugsweise verwendet werden N,N,N',N'-Tetramethyl-di-(2-aminoethyl)-ether, N,N',N',N'',N''-Pentamethyl-diethylen-triamin und/oder N,N-Dimethyl-ethanolamin. Die tert. Amine werden in Mengen von 2 bis 12 Gew.-Teilen, vorzugsweise 3 bis 6 Gew.-Teilen pro 100 Gew.-Teilen wäßriger Alkalisilikatlösung eingesetzt.

Als Alkylenoxide kommen 2,3-Epoxi-propanol-1 und vorzugsweise Ethylenoxid, 1,2-Propylenoxid oder deren Gemische in Betracht. Zur Oxalkylierung werden pro Mol tertiäres Amin mindestens ein Mol, vorzugsweise 1 bis 10 Mole und insbesondere 1 bis 3 Mole Alkylenoxid oder Alkylenoxidmischung verwendet.

Die erfindungsgemäßen stabilen Wasserglaslösungen können nach verschiedenen Verfahren hergestellt werden. Nach dem vorzugsweise angewandten Verfahren A wird die Lösung aus wäßriger Alkalisilikatlösung und Alkalihydroxid, zweckmäßigerweise wäßriger Natriumhydroxidlösung, unter Rühren bei Temperaturen von 0 bis 50°C mit dem tertiären Amin gemischt. Man erhält eine zweiphasige Reaktionsmischung, die bei Temperaturen von 0 bis 100°C, vorzugsweise von 10 bis 50°C unter Rühren solange mit mindestens einem Alkalenoxid, vorzugsweise Ethylenoxid begast und oxalkyliert wird, bis eine homogene Lösung gebildet wurde. Hierzu erforderlich sind die obengenannten Alkylenoxidmengen.

Nach einer anderen Verfahrensweise wird zunächst das tert. Amin mit mindestens einem Alkenoxid, vorzugsweise Ethylenoxid bei Temperaturen von 0 bis 100°C, vorzugsweise von 10 bis 50°C unter Rühren oxalkyliert und das erhaltene Reaktionsgemisch bei einer Temperatur von 10 bis 100°C, vorzugsweise 10 bis 60°C unter Rühren mit der Lösung aus wäßriger Alkalisilikatlösung und Alkalihydroxid gemischt. Gegebenenfalls kann es auch zweckmäßig sein, die Oxalkylierung unter Druck, beispielsweise bei 1 bis 10 bar, vorzugsweise 2 bis 7 bar und gegebenenfalls in Gegenwart von Inertgas, vorzugsweise Stickstoff, durchzuführen.

Die erfindungsgemäßen stabilen Wasserglaslösungen werden vorzugsweise zur Herstellung von Organosilikatschaumstoffen verwendet.

Zur Herstellung der Organosilikatschaumstoffe werden die Ausgangsstoffe nach der aus der Polyurethanschaumstoffchemie bekannten Technik, vorzugsweise als Zweikomponenten-System nach dem one shot-Verfahren zur Reaktion gebracht.

Als A-Komponente bezeichnet man hierbei eine Reaktionsmischung, die neben den Verbindungen mit reaktiven Wasserstoffatomen noch Katalysatoren und gegebenenfalls physikalisch wirdende Treibmittel, Hilfsmittel und Zusatzstoffe enthält und als B-Komponente die organischen Polyisocyanate, die gegebenenfalls mit physikalisch wirdenden Treibmitteln, Hilfsmitteln und Zusatzstoffen gemischt sein können.

Als Verbindungen mit reaktiven Wasserstoffatomen kommen die erfindungsgemäßen stabilen Wasserglaslösungen in Betracht, die zur Herstellung der Organosilikatschaumstoffe mit tert. Aminogruppen enthaltenden Polyether-polyolen gemischt werden. Geeignete Mischungen enthalten pro 100 Gew.-Teilen Wasserglaslösung 1 bis 20 Gew.-Teile, vorzugsweise 2 bis 8 Gew.-Teile der Aminogruppen enthaltenden Polyether-polyole. Gegebenenfalls zusätzlich mitverwendet werden können auch andere

## EP 0 099 531 B1

übliche Polyether-polyole mit Funktionalitäten von 2 bis 8, vorzugsweise von bis 6 und Hydroxylzahlen von 30 bis 800, vorzugsweise von 40 bis 700, hydroxylgruppenhaltige Polymere mit Funktionalitäten von 2 bis 6 und Hydroxylzahlen von 50 bis 400, wie z.B. hydroxylgruppenhaltige Polyester, Polyesteramide, Polyacetale und Polycarbonate, sowie Kettenverlängerungs- und/oder Vernetzungsmittel.

Die erfindungsgemäß verwendbaren tertiäre Aminogruppen enthaltenden Polyether-polyole, die mindestens eine, vorzugsweise 1 bis 5 teriäre Aminogruppen als Brückenglieder in der Polyoxyalkylenkette gebunden enthalten, besitzen Hydroxylzahlen von 200 bis 800, vorzugsweise von 400 bis 700 und Funktionalitäten von 2 bis 5, vorzugsweise von 3 bis 4. Die Produkte können nach bekannten Verfahren aus einem oder mehreren Alkylenoxiden mit 2 bis 4 Kohlenstoffatomen im Alkylenrest und einem aminogruppenhaltigen Startermolekül, das 2 bis 5, vorzugsweise 3 bis 4, aktive Wasserstoffatome gebunden enthält, hergestellt werden. Geeignete Alkylenoxide sind beispielsweise 1,2- bzw. 2,3-Butylenoxid und vorzugsweise Ethylenoxid und 1,2-Propylenoxid. Die Alkylenoxide können einzeln, alternierende nacheinander oder als Mischungen verwendet werden. Als aminogruppenhaltige Startermoleküle kommen beispielsweise in Betracht: Ammoniak, Hydrazin, N-Mono- und N,N'-bzw. N,N-Dialkylhydrazine mit 1 bis 6 Kohlenstoffatomen im Alkylrest, gegebenenfalls N-Mono-, N,N- und N,N'-dialkylsubstituierte Diamine mit 1 bis 6 Kohlenstoffatomen im Alkylrest, wie z.B. Ethylendiamin, 1,2- und 1,3-Propylendiamin, 1,4-Butylendiamin, 1,6-Hexamethylen-diamin, 2,4- und 2,6-Toluylendiamin, 4,4'-, 2,4'- und 2,2'-Diaminodiphenylmethan sowie die entsprechenden Destillationsrückstände, wie sie nach Abdestillation von reinen Diaminen aus den Reaktionsmischungen erhalten werden, Aminoalkohole, wie z.B. Mono-, Di- und Trialkanolamin, Dialkylentriamine, Trialkylentetraamine und oligomere Polyalkylenpolyamine. Vorzugsweise verwendet werden als aminogruppenhaltige Startermoleküle: Ethylendiamin, 1,4-Butylendiamin, 1,6-Hexamethylendiamin sowie der entsprechende Destillationsrückstand, Triethanolamin und Diethylentriamin.

Die tertiären Aminogruppen enthaltenden Polyether-polyole können als solche oder in Form von Mischungen verwendet werden. Sie können ferner mit üblichen, d.h. mit stickstoffgruppenfreien, Polyether-polyolen oder hydroxylgruppenhaltigen Polymeren oder obengenannten Art gemischt werden.

Bewährt haben sich beispielsweise Mischungen, die bestehen aus: 50 bis ungefähr 100 Gew.%, vorzugsweise 70 bis 97 Gew.%, bezogen auf das Gesamtgewicht der Mischung, mindestens eines tertiäre Aminogruppen enthaltenden Polyether-polyols und ungefähr 0 bis 50 Gew.%, vorzugsweise 3 bis 30 Gew.%, bezogen auf das Gesamtgewicht der Mischung, eines stickstoffreien Polyether-polyols oder eines anderen hydroxylgruppenhaltigen Polymeren.

Die üblichen Polyether-polyole werden nach bekannten Verfahren aus einem oder mehreren der obengenannten Alkylenoxide und mindestens einem stickstofffreien Startermolekül mit 2 bis 8, vorzugsweise 2 bis 3 reaktiven Wasserstoffatomen hergestellt. Als stickstofffreie Startermoleküle kommen beispielsweise in Betracht: Wasser, Phosphorsäure, Polycarbonsäuren, insbesondere Dicarbonsäuren, wie z.B. Adipinsäure, Bernsteinsäure, Phthalsäure und Terephthalsäure und vorzugsweise Polyhydroxylverbindungen, wie Ethylen-, Propylen-, Diethylen-, Dipropylen-glykol, Pentaerythrit, Sorbit, Sucrose und vorzugsweise Glycerin und Trimethylolpropan.

Wie bereits erwähnt kommen als hydroxylgruppenhaltige Polymere beispielsweise hydroxylgruppenhaltige Polyester, Polyesteramide, Polyacetale und Polycarbonate in Betracht. Die hydroxylgruppenhaltigen Polyester können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, und aromatische Dicarbonsäuren, wie Phthalsäure und Terephthalsäure. Beispiele für zwei- oder mehrwertige, insbesondere zwei- und drewertige Akohole sind: Ethylenglykol, Diethylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen, oder Mischungen aus mehrwertigen Alkoholen und Aminoalkoholen und/oder Polyaminen gewonnenen, vorwiegend linearen Kondensate mit reaktiven Wasserstoffatomen.

Als hydroxylgruppenhaltige Polyacetale kommen, z.B. die aus Glykolen, wie Diethylenglykol, Triethylenglykol, 4,4'-Di-(2-hydroxyethoxy)-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die z.B. durch Umsetzung von Diolen wie Propandiol-1,3, Butandiol-1,4 und/oder Hexandiol-1,6, Diethylenglykol, Triethylenglykol, Tetraethylenglykol mit Diarylcarbonaten, z.B. Diphenylcarbonat oder Phosgen, hergestellt werden können.

Gegebenenfalls kann es zweckmäßig sein, zur Erzielung spezieller mechanischer Eigenschaften, neben den genannten Wasserglaslösungen, tertiären Aminogruppen enthaltenden Polyether-polyolen sowie gegebenenfalls stickstoffgruppenfreien Polyether-polyolen und/oder hydroxylgruppenhaltigen Polymeren zusätzlich Kettenverlängerungsmittel und/oder Vernetzungsmittel sur Herstellung der Organosilikatschaumstoffe mitzuverwenden. Als derartige Mittel kommen polyfunktionelle, insbesondere di- und

4

trifunktionelle Verbindungen mit Molekulargewichten von 17 bis 600, vorzugsweise 60 bis 300, in Betracht. Verwendet werden beispielsweise Di- und Trialkanolamine, wie Diethanolamin und Triethanolamin, aliphatische und aromatische Diamine, wie z.B. Ethylendiamin, Butylendiamin-1,4, Hexamethylendiamin-1,6,4,4'-Diamino-diphenylmethan, 3,3'-dialkylsubstituierte 4,4'-Diaminodiphenylmethane, gegebenenfalls 3,5-dialkylsubstituierte 2,4- und 2,6-Toluylendiamin und vorzugsweise aliphatische Diole und Triole mit 2 bis 6 Kohlenstoffatomen, wie Ethylenglykol, 1,4-Butylenglykol, 1,6-Hexamethylenglykol, Glycerin und Trimethylolpropan.

Zur Beschleunigung der Umsetzung zwischen den Verbindungen mit reaktiven Wasserstoffatmen und Polyisocyanaten werden der Reaktionsmischung oder vorzugsweise der A-Komponente übliche Polyurethankatalysatoren in einer Menge von 0,01 bis 10 Gew.-Teilen, vorzugsweise 0,1 bis 3 Gew.-Teilen pro 100 Gew.-Teilen der Mischung aus stabilen Wasserglaslösungen und tertiären Aminogruppen enthaltenden Polyether-polyolen einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diamino-ethylether, Bis-(dimethylaminopropyl)-harnstoff, N-Methyl- bzw. N-Ethylmorpholin, Dimethylpiperazin, Pyridin, 1,2-Dimethylimidazol, 1-Azabicyclo-(3,3,0)-octan, Dimethylaminoethanol, N,N',N''-Tris-(dialkylaminoalkyl)-hexahydrotriazine, z.B. N,N',N''-Tris-(dimethylaminopropyl)-s-hexahydrotriazin und insbesondere Triethylendiamin und Triethanolamin. Geeignet sind jedoch aus Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat, die gewöhnlich in Kombination mit den basischen Polyurethankatalysatoren Anwendung finden.

Als Treibmittel eignet sich insbesondere Kohlendioxid, das bei der Reaktion von Wasser mit den organischen Polyisocyanaten gebildet wird. Im Gemisch mit Wasser können jedoch auch physikalisch wirkende Treibmittel, die vorzugsweise der A-Komponente einverleibt werden, eingesetzt werden. Gegebenenfalls kann es auch zweckmäßig sein, das organische Polyisocyanat mit dem physikalisch wirkenden Treibmittel zu mischen und dadurch die Viskosität der B-Komponente zu verringern.

Als physikalisch wirkende Treibmittel eignen sich Flüssigkeiten, die gegenüber den organischen Polyisocyanaten inert sind und Siedepunkte unter 100°C, vorzugsweise unter 50°C und insbesondere zwischen −50°C und 30°C bei Atmosphärendruck aufweisen, so daß sie unter dem Einflüß der exothermen Polyadditions- und Polykondensationsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoff, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Triebmitteln kann in Abhängigkeit von der gewünschten Schaumstoffdichte auf einfache Weise ermittelt werden und beträgt ungefähr 1 bis 50 Gew.-Teile, vorzugsweise 3 bis 40 Gew.-Teile pro 100.-Teilen der Mischung aus Wasserglaslösung und tertiären Aminogruppen enthaltenden Polyether-polyolen.

Die B-Komponente besteht vorzugsweise aus den organischen Polyisocyanaten. Hierfür in Betracht kommen beispielsweise aliphatische, cycloaliphatische, aliphatisch-aromatische und vorzugsweise aromatische mehrwertige Isocyanate. Im einzelnen seien beispielhaft genannt: aliphatische Diisocyanat wie Ethylen-, 1,4-Tetramethylen-, 1,6-Hexamethylen- und 1,12-Dodecandiisocyanat; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, 4,4'-und 2,4'-Diisocyanato-dicyclohexylmethan; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat und aromatische Polyisocyanate wie 4,4',4''-Triphenylmethan-triisocyanat, 2,4,6-Triisocyanatobenzol und Polyphenyl-polymethylen-polyisocyanate.

Verwendet werden können ferner modifizierte Polyisocyanate, beispielsweise Carbodiimidgruppen aufweisende Polyisocyanate (DE—PS 10 92 007), Allophanatgruppen aufweisende Polyisocyanate (GB—PS 994 890; BE—PS 761 626), Isocyanuratgruppen aufweisende Polyisocyanate (DE—PS 10 22 789, DE—PS 12 22 067, DE—PS 10 27 394, DE—OS 19 29 034 und DE—OS 20 04 048), Urethangruppen aufweisende Polyisocyanate (BE—PS 752 261, US—PS 3 394 164), Biuretgruppen aufweisende Polyisocyanate (DE—PS 11 01 394, GB—PS 889 050) und Estergruppen aufweisende Polyisocyanate (GB—PS 965 474, GB—PS 10 72 956, US—PS 3 567 763, DE—PS 12 31 688).

Bevorzugt verwendet werden die technisch gut zugänglichen aromatischen Di- und Polyisocyanate wie 2,4- und 2,6-Toluylendiisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'- 2,4'-, 4,4'-Diphenylmethan-diisocyanaten und Polyphenyl-polymethylen-polyisocyanaten (Roh-MDI) und Gemische aus Toluylen-diisocyanaten und Roh-MDI sowie Urethan- und Isocyanaturatgruppen aufweisende Polyisocyanate. Die genannten Di- und Polyisocyanate können einzeln oder in Form von Mischungen eingesetzt werden.

Der Reaktionsmischung, vorzugsweise der A-Komponente, können noch Hilfsmittel und Zusatzstoffe einverleibt werden. Genannt seien beispielsweise Stabilisatoren, Hydrolysenschutzmittel, Porenregler, fungistatisch und bakteriostatisch wirkende Substanzen, Farbstoffe, Pigmente, Füllstoffe, oberflächenaktive Stoffe, Weichmacher und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,2 bis 8, vorzugsweise von 0,5 bis 5 Gew.- Teilen pro 100 Gew.-Teilen der Mischung aus Wasserglaslösung und tertiären Aminogruppen enthaltenden Polyether-polyolen angewandt werden.

Es kann auch vorteilhaft sein, einen Weichmacher in das Reaktionsgemisch einzubeziehen, so daß die Neigung zur Sprödigkeit in den Produkten verringert wird. Es können übliche Weichmachungsmittel verwendet werden, doch ist es besonders zweckmäßig, solche Mittel zu verwenden, die Phosphor und/oder Halogenatome enthalten und dadurch die Flammfestigkeit der Organosilikatschaumstoffe zusätzlich vergrößern. Zu solchen Mitteln gehören Trikresylposphat, Tris-2-chlorethylphosphat, Tris-chlorpropylphosphat und Tris-2,3-dibromopropylphosphat.

Als Füllstoffe seien genannt: organische Füllstoffe wie z.B. Melamin, Kohlenstoff und -fasern und anorganische Füllstoffe, beispielsweise silikathaltige Mineralien, wie Antigorit, Serpentin, Hornblenden, Amphibole, Chrisotil, Talkum und [R]Transpafill, Metalloxide, wie Kaolin, Titanoxid und Eisenoxide, Metallsalze wie Kreide und Schwerspat sowie Glas. Besonders erwähnt seien auch anorganische, Pigmente, wie z.B. Cadmiumsulfid und Zinksulfid und Flammschutzmittel wie z.B. Melamin und Aluminiumoxidhydrat.

Nähere Angaben über die obengenannten anderen üblichen Zusatzstoffe sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, zu entnehmen.

Zur Herstellung der Organosilikatschaumstoffe werden die Verbindungen mit reaktiven Wasserstoffatomen und organischen Polyisocyanaten in solchen Mengen zur Umsetzung gebracht, daß die Kennzahl 2 bis 30, vorzugsweise 4 bis 15 beträgt. Die Kennzahl ist hierbei definiert als

$$\frac{\text{Isocyanatmenge (praktisch)} \times 100}{\text{Isocyanatmenge (berechnet)}}$$

Die Organosilikatschaumstoffe werden vorzugsweise nach dem one shot-Verfahren hergestellt. Als besonders zweckmäßig hat sich hierbei erwiesen, so daß diese Verfahrensweise bevorzugt Anwendung findet, die Ausgangsstoffe zu zwei Komponenten zu vereinigen, wobei die A-Komponente—wie bereits beschrieben—vorzugsweise die Verbindungen mit reaktiven Wasserstoffatomen, die Katalysatoren, Treibmittel, Hilfsmittel und Zusatzstoffe enthält und die B-Komponente vorzugsweise aus den organischen Polyisocyanaten besteht.

Vorteilhaft ist hierbei, daß die A- und B-Komponente raumsparend transportiert und beschränkte Zeit gelagert werden können und vor Herstellung der Organosilikatschaumstoffe in den genannten Mengenverhältnissen bei Temperaturen von 10 bis 50, vorzugsweise 15 bis 30°C nur noch intensiv gemischt werden müssen. Die Reaktionsmischung läßt man danach in offenen oder geschlossenen Formen aufschäumen, wobei beim Verschäumen in geschlossenen Formen üblicherweise Verdichtungsgrade von 1,2 bis 8, vorzugsweise von 2 bis 4 Anwendung finden.

Die erfindungsgemäß hergestellten Organosilikatschaumstoffe besitzen Dichten von 4 bis 150 g/l, vorzugsweise 7 bis 20 g/l, zeigen praktisch keine Neigung zum Schrumpfen und zeichnen sich durch eine weitgehende Offenzelligkeit, gute Flammwidrigkeit und äußerst geringe Rauchgasdichte aus.

Aufgrund der guten Fließfähigkeit der ungeschäumten Reaktionsmischung und dem geringen Druckaufbau beim Verschäumen eignen sich die Produkte insbesondere zum Ausschäumen von dünnen Sandwichelementen. Die Produkte finden ferner Verwendung im Bergbau und in der Bauindustrie zum Ausschäumen von Hohlräumen sowie als Leichtschaumstoffe.

## Beispiel 1

Herstellung der stabilen Wasserglaslösung:

82,0 kg wäßrige Natriumsilikatlösung ($SiO_2$:$Na_2O$=1:3,44) von 38 bis 40°Be wurden zunächst unter Rühren bei 25°C mit 7,13 kg einer 50 gew.-%igen wäßrigen Natronlauge und danach mit 3,56 kg N,N,N',N'-Tetramethyl-di-(2-aminoethyl)-ether vermischt. Die hierbei gebildete zweiphasige Reaktionsmischung wurde bei 25°C unter Rühren über einen Zeitraum von 0,5 Stunden mit 1,88 kg Ethylenoxid begast und danach zur Vervollständigung der Umsetzung noch 3 h gerührt. Es entstand eine klare stabile Lösung.

## Beispiel 2

Man verfuhr analog den Angaben von Beispiel 1, verwendete jedoch die folgenden Aufbaukomponenten und -mengen:

867,0 g wäßrige Natriumsilikatlösung ($SiO_2$:$Na_2O$=1:3,44) von 38 bis 40°Be,

75,4 g 50 gew.%ige wäßrige Natronlauge,
37,6 g N,N,N',N'-Tetramethyl-di-(2-aminoethyl)ether und eine Mischung aus
10   g Ethylenoxid und
16   g 1,2-Propylenoxid.

Man erhielt eine klare stabile Lösung.

Beispiel 3

Eine klare, stabile Lösung wurde ferner erhalten, wenn man analog den Angaben von Beispiel 2 verfuhr, jedoch anstelle der Mischung aus Ethylenoxid und 1,2-Propylenoxid 33,2 g 2,3-Epoxi-propanol-1 einsetzte.

Beispiel 4

a) In einem Rundkolben, ausgerüstet mit einem kühlbaren Tropftrichter, Rührer und Rückflußkühler, wurden 320 g N,N,N',N'-Tetramethyl-di-(2-aminoethyl)-ether mit 496 g Wasser vermischt und zu dieser Lösung wurden innerhalb von einer Stunde unter Rühren 176 g Ethylenoxid hinzugefügt. Durch äußere Kühlung wurde die Reaktionstemperatur bei maximal 45°C gehalten. Zur Vervollständigung der Reaktion wurde die Mischung danach noch eine Stunde bei 25°C gerührt.

b) 117,8 g des gemäß 4a) hergestellten Produkts wurden bei 25°C in eine Lösung aus 76 g einer 50 gew.%igen wäßrigen Natronlauge und 826,8 g wäßrige Natriumsilikatlösung (SiO$_2$:Na$_2$O=1:3,44) von 38 bis 40 Be eingerührt. Man erhielt eine klare, stabile Lösung.

Beispiel 5

Herstellung des Organosilikatschaumstoffs:

A-Komponente:
Mischung aus
160 g der nach Beispiel 1 hergestellten Wasserglaslösung,
40 g Wasser,
8 g Silikonstabilisator DC 190 der Firma Dow Corning Corp.,
4 g Triethylamin,
6 g eines tertiäre Aminogruppen enthaltenden Polyetherpolyols mit einer OH-Zahl von 563, hergestellt durch Propoxylierung des Kolonnensumpfes der Hexamethylendiamindestillation und
60 g Trichlorofluormethan.

B-Komponente:
Mischung aus
200 g eines Gemisches aus Diphenylmethan-diisocyanaten und Polyphenyl-polymethylen-polyisocyanaten (NCO-Gehalt 31 Gew.-%) und
20 g Tris-chlorethylphosphat

1112 g der A-Komponente und 880 g der B-Komponente wurden mit einem Rührer bei einer Drehzahl von 1648 U/Min bei 25°C 10 Sekunden lang gemischt, die Reaktionsmischung danach in einen Polyethylenfoliensack mit einem Durchmesser von 60 cm und einer Höhe von 100 cm eingebracht und frei verschäumt.

Hierbei ermittelt wurden folgende Kenndaten:

| | |
|---|---|
| Startzeit: | 18 Sekunden |
| Steigzeit: | 53 Sekunden |
| Rohdichte [kg/m$^3$]: | 12,7 |
| Druckfestigkeit nach DIN 53 420 [N/mm$^2$]: | 14,7 |
| Durchbiegung bei Bruch nach DIN 53 423 [mm]: | 39,7 |
| Grenzbeigespannung nach DIN 53 420 [k.Pa]: | 16,4 |
| Dimensionsstabilität in der Kälte bei −30°C nach AGK 7 Abweichung in der Länge [%]: | −0,1 |
| Abweichung in der Breite [%]: | 0,0 |
| Abweichung in der Dicke [%]: | 0,0 |
| Dimensionsstabilität in der Wärme bei 110°C und 16 Stdn. | |

# EP 0 099 531 B1

Lagerung nach AGK 7
Abweichung in der Länge [%]:      −0,7
Abweichung in der Breite [%]:      −0,7
Abweichung in der Dicke [%]:      0,0
Brandverhalten nach DIN 4102:      B2

Bemerkung: Der erhaltene Organosilikatschaumstoff war feinzellig und abriefest.

**Patentansprüche**

1. Stabile Wasserglaslösungen, erhalten
A) durch Mischen
   a) einer Lösung aus
      i) 100 Gew.-Teilen einer wäßrigen Alkalisilikatlösung mit einem Molverhältnis Alkalimetalloxid: $SiO_2$ größer als 1 und einer Dichte von 28° bis 60° Be und
      ii) 1,5 bis 20 Gew.-Teilen Alkalihydroxid mit
   b) 2 bis 12 Gew.-Teilen eines tertiären Amins und anschließender Oxalkylierung der erhaltenen zweiphasigen Reaktionsmischung mit
   c) mindestens einem Mol eines Alkylenoxids pro Mol tert. Amin oder
B) durch Oxalkylierung in Gegenwart von Wasser von
   b) 2 bis 12 Gew.-Teilen eines tertiären Amins mit
   c) mindestens einem Mol eines Alkylenoxids pro Mol tert. Amin
   und Mischen des erhaltenen Reaktionsgemisches mit
   a) einer Lösung aus
      i) 100 Gew.-Teilen einer wäßrigen Alkalisilikatlösung mit einem Molverhältnis Alkalimetalloxid:$SiO_2$ größer als 1 und einer Dichte von 28° bis 60°Be und
      ii) 1,5 bis 20 Gew.-Teilen Alkalihydroxid.
2. Stabile Wasserglaslösungen nach Anspruch 1, dadurch gekennzeichnet, daß man als wäßrige Alkalisilikatlösungen wäßrige Natrium- und/oder Kaliumwasserglaslösungen mit 28 bis 60°Be verwendet.
3. Stabile Wasserglaslösungen nach Anspruch 1, dadurch gekennzeichnet, daß man als Alkalihydroxide wäßrige 40 bis 60 gew.%ige Natrium- und/oder Kaliumhydroxidlösungen verwendet.
4. Stabile Wasserglaslösungen nach Anspruch 1, dadurch gekennzeichnet, daß man als tertiäre Amine N,N,N′,N′-Tetramethyl-di(-2-aminoethyl)-ether, N,N′,N′,N′′,N′′-Pentamethyl-diethylentriamin oder N,N-Dimethylethanolamin verwendet.
5. Stabile Wasserglaslösungen nach Anspruch 1, dadurch gekennzeichnet, daß man als Alkylenoxide Ethylenoxid und/oder Propylenoxid verwendet.
6. Verfahren zur Herstellung von stabilen Wasserglaslösungen, dadurch gekennzeichnet, daß man
A) a) eine Lösung aus
      i) 100 Gew.-Teilen einer wäßrigen Alkalisilikatlösung mit einem Molverhältnis Alkalimetalloxid: $SiO_2$ größer als 1 und einer Dichte von 28° bis 60°Be und
      ii) 1,5 bis 20 Gew.-Teilen Alkalihydroxid mit
   b) 2 bis 12 Gew.-Teilen eines tertiären Amins mischt und die erhaltene zweiphasige Reaktionsmischung bei Temperaturen von 0 bis 100°C unter Rühren mit
   c) mindestens einem Mol eines Alkylenoxids pro Mol tert.-Amin begast oder
B) b) 2 bis 12 Gew.-Teile eines tertiären Amins in Gegenwart von Wasser mit
   c) mindestens einem Mol eines Alkylenoxids pro Mol tert.-Amin bei Temperaturen von 0 bis 100°C oxalkyliert und das erhaltene Reaktionsgemisch mit
   a) einer Lösung aus
      i) 100 Gew.-Teilen einer wäßrigen Alkalisilikatlösung mit einem Molverhältnis Alkalimetalloxid: $SiO_2$ größer als 1 und einer Dichte von 28° bis 60° Be und
      ii) 1,5 bis 20 Gew.-Teilen Alkalihydroxid bei Temperaturen von 10 bis 100°C mischt.
7. Verwendung der stabilen Wasserglaslösungen nach einem der Ansprüche 1 bis 5, zur Herstellung von Organosilikatschaumstoffen.
8. Verfahren zur Herstellung von Organosilikatschaumstoffen durch Umsetzung von organischen Polyisocyanaten und Verbindungen mit reaktiven Wasserstoffatomen in Gegenwart von Katalysatoren, Treibmitteln und gegebenenfalls Hilfsmitteln und Zusatzstoffen, dadurch gekennzeichnet, daß man als Verbindungen mit reaktiven Wasserstoffatomen Mischungen aus stabilen Wasserglaslösungen nach Anspruch 1 und tertiäre Aminogruppen enthaltenden Polyether-polyolen verwendet.
9. Verfahren zur Herstellung von Organosilikatschaumstoffen nach Anspruch 8, dadurch gekennzeichnet, daß man pro 100 Gew.-Teilen stabiler Wasserglaslösung nach Anspruch 1 ein bis 20 Gew.-Teile eines tertiäre Aminogruppen enthaltenden Polyether-polyols mit einer Funktionalität von 2 bis 5 und einer Hydroxylzahl von 200 is 800 verwendet.
10. Verfahren zur Herstellung von Organosilikatschaumstoffen nach Anspruch 8, dadurch gekennzeichnet, daß die Kennzahl 2 bis 30 beträgt.

8

**Revendications**

1. Solutions stables de verre soluble, obtenues

A) par mélange

a) d'une solution de

i) 100 parties en poids d'une solution aqueuse de silicate alcalin ayant un rapport molaire oxyde de metal alcalin: SiO$_2$ supérieur à 1 et une densité de 28° à 60°B, et

ii) 1,5 à 20 parties en poids d'hydroxyde alcalin avec

b) 2 à 12 parties en poids d'une amine tertiaire, suivi d'oxalkylation du mélange réactionnel à deux phases obtenu par

c) au moins 1 mole d'une oxyde d'alkylène par mole d'amine tertiaire, ou

B) par oxalkylation, en présence d'eau, de

b) 2 à 12 parties en poids d'une amine tertiaire par

c) au moins 1 mole d'un oxyde d'alkylène par mole d'amine tertiaire et mélange du mélange réactionnel obtenu avec

a) une solution de

i) 100 parties en poids d'une solution aqueuse de silicate alcalin ayant un rapport molaire oxyde de métal alcalin: SiO$_2$ supérieur à 1 et une densité de 28° à 60°B, et

ii) 1,5 à 20 partis en poids d'hydroxyde alcalin.

2. Solutions stables de verre soluble selon la revendication 1, caractérisées en ce qu'on utilise, comme solutions aqueuses de silicate alcalin, des solutions aqueuses d'orthosilicate de sodium et/ou de potassium d'une densité de 28 à 60°B.

3. Solutions stables de verre soluble selon la revendication 1, caractérisées en ce qu'on utilise, comme hydroxydes alcalins, des solutions aqueuses à 40—60% en poids d'hydroxyde de sodium et/ou de potassium.

4. Solutions stables de verre soluble selon la revendication 1, caractérisées en ce qu'on utilise, comme amines tertiaires, du N,N,N',N'-tétraméthyl-di(2-aminoéthyl)-éther, de la N,N',N',N'',N''-pentaméthyldié-thylènetriamine ou de la N,N-diméthyléthanolamine.

5. Solutions stables de verre soluble selon la revendication 1, caractérisées en ce qu'on utilise, comme oxydes d'alkylène, de l'oxyde d'éthylène et/ou de l'oxyde de propylène.

6. Procédé de préparation de solutions stables de verre soluble, caractérisé en ce que

A) on mélange

a) une solution de

i) 100 parties en poids d'une solution aqueuse de silicate alcalin ayant un rapport molaire oxyde de métal alcalin: SiO$_2$ supérieure à 1 et une densité de 28° à 60°B, et

ii) 1,5 à 20 parties en poids d'hydroxyde alcalin avec

b) 2 à 12 parties en poids d'une amine tertiaire, et on fait passer à travers le mélange réactionnel à deux phases obtenu, à une température de 0 à 100°C et sous agitation

c) au moins 1 mole d'un oxyde d'alkylène par mole d'amine tertiaire, ou

B) on oxalkyle, à une température de 0 à 100°C,

b) 2 à 12 parties en poids d'une amine tertiaire, en présence d'eau, par

c) au moins 1 mole d'un oxyde d'alkylène par mole d'amine tertiaire et on mélange le mélange réactionnel obtenu, à une température de 10 à 100°c avec

a) une solution de

i) 100 parties en poids d'une solution aqueuse de silicate alcalin ayant un rapport molaire oxyde de métal alcalin: SiO$_2$ supérieure à 1 et une densité de 28° à 60°B, et

ii) 1,5 à 20 parties en poids d'hydroxyde alcalin.

7. Utilisation des solutions stables de verre soluble selon l'une quelconque des revendications 1 à 5, pour la fabrication de mousses d'organosilicates.

8. Procédé de fabrication de mousses d'organosilicates par réaction de polyisocyanates organiques et de composés contenant des atomes d'hydrogène réactifs en présence de catalyseurs, d'agents moussants et éventuellement d'adjuvants et d'additifs, caractérisé en ce qu'on utilise, comme composés contenant des atomes d'hydrogène réactifs, des mélanges de solutions stables de verre soluble selon la revendication 1 et de polyéther-polyols contenant des groupements amino tertiaires.

9. Procédé de fabrication de mousses d'organosilicates selon la revendication 8, caractérisé en ce qu'on utilise, pour 100 parties en poids de solution stable de verre soluble selon la revendication 1, de 1 à 20 parties en poids d'un polyéther-polyol contenant des groupements amino tertiaires, ayant une fonctionnalité de 2 à 5 et un indice d'hydroxyle de 200 à 800.

10. Procédé de fabrication de mousses d'organosilicates selon la revendication 8, caractérisé en ce que le nombre caractéristique est compris entre 2 et 30.

# EP 0 099 531 B1

**Claims**

1. A stable waterglass solution obtained by
A) mixing
   a) a solution of
   i) 100 parts by weight of an aqueous alkali metal silicate solution having a molar ratio of alkali metal oxide: $SiO_2$ greater than 1 and a density of 28° to 60° Be and
   ii) from 1.5 to 20 parts by weight of an alkali metal hydroxide with
   b) from 2 to 12 parts by weight of a tertiary amine and subsequent alkoxylation of the resulting two-phase reaction mixture with
   c) at least one mole of an alkylene oxide per mole of tertiary amine or
B) by alkoxylation in the presence of water of
   b) from 2 to 12 parts by weight of a tertiary amine with
   c) at least one mole of an alkylene oxide per mole of tertiary amine and mixing the resulting reaction mixture with
   a) a solution of
   i) 100 parts by weight of an aqueous alkali metal silicate solution having a molar ratio of alkali metal oxide: $SiO_2$ greater than 1 and a density of from 28° to 60° Be and
   ii) from 1.5 to 20 parts by weight of an alkali metal hydroxide.

2. A stable waterglass solution as claimed in Claim 1, wherein the aqueous alkali metal silicate solution used is an aqueous sodium or potassium waterglass solution of from 28 to 60° Be.

3. A stable waterglass solution as claimed in Claim 1, wherein the alkali metal hydroxide used is an aqueous 40—60% strength by weight sodium or potassium hydroxide solution.

4. A stable waterglass solution as claimed in Claim 1, wherein the tertiary amine used is N,N,N',N'-tetramethyldi(2-aminoethyl)ether, N,N',N',N'',N''-pentamethyldiethylenetriamine or N,N-dimethylethanolamine.

5. A stable waterglass solution as claimed in Claim 1, wherein the alkylene oxide used is ethylene oxide and/or propylene oxide.

6. A process for preparing a stable waterglass solution, which comprises
A) mixing
   a) a solumion of
   i) 100 parts by weight of an aqueous alkali metal silicate solution having a molar ratio of alkali metal oxide: $SiO_2$ greater than 1 and a density of from 28° to 60° Be and
   ii) from 1.5 to 20 parts by weight of an alkali metal hydroxide with
   b) from 2 to 12 parts by weight of a tertiary amine and subjecting the resulting two-phase reaction mixture at from 0 to 100°C with stirring to gasification with
   c) at least one mole of an alkylene oxide per mole of tertiary amine, or
B) alkoxylating
   b) from 2 to 12 parts by weight of a tertiary amine in the presence of water with
   c) at least one mole of an alkylene oxide per mole of tertiary amine at from 0 to 100°C and mixing the resulting reaction mixture with
   a) a solution of
   i) 100 parts by weight of an aqueous alkali metal silicate solution having a molar ratio of alkali metal oxide: $SiO_2$ greater than 1 and a density of from 28° to 60° Be and
   ii) from 1.5 to 20 parts by weight of an alkali metal hydroxide at from 10 to 100°C.

7. The use of a stable waterglass solution as claimed in any one of Claims 1 to 5 for producing an organosilicate foam.

8. A process for producing an organosilicate foam by reacting an organic polyisocyanate and a compound having reactive hydrogen atoms in the presence of a catalyst, a blowing agent and in the presence or absence of assistants and additives, which comprises using as the compound having reactive hydrogen atoms a mixture of a stable waterglass solution as claimed in Claim 1 with a polyether polyol containing tertiary amino groups.

9. A process for producing an organosilicate foam as claimed in Claim 8, wherein for every 100 parts by weight of stable waterglass solution as claimed in Claim 1 from 1 to 20 parts by weight of a polyether polyol which contains tertiary amino groups and has a functionality of from 2 to 5 and a hydroxyl number of from 200 to 800 are used.

10. A process for producing an organosilicate foam as claimed in Claim 8, wherein the parameter is from 2 to 30.

10